(19) **Europäisches Patentamt / European Patent Office / Office européen des brevets**

(11) **EP 4 266 424 A1**

(12) **EUROPEAN PATENT APPLICATION**
published in accordance with Art. 153(4) EPC

(43) Date of publication:
**25.10.2023 Bulletin 2023/43**

(21) Application number: **21911454.3**

(22) Date of filing: **20.12.2021**

(51) International Patent Classification (IPC):
**H01M 4/525** (2010.01)      **H01M 4/505** (2010.01)
**H01M 10/052** (2010.01)

(52) Cooperative Patent Classification (CPC):
**H01M 4/505; H01M 4/525; H01M 10/052;**
Y02E 60/10

(86) International application number:
**PCT/KR2021/019440**

(87) International publication number:
**WO 2022/139387 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.12.2020 KR 20200179684**

(71) Applicants:
- **POSCO Holdings Inc.**
  **Seoul 06194 (KR)**
- **RESEARCH INSTITUTE OF INDUSTRIAL SCIENCE & TECHNOLOGY**
  **Pohang-si, Gyeongsangbuk-do 37673 (KR)**
- **POSCO Chemical Co., Ltd**
  **Gyeongsangbuk-do 37918 (KR)**

(72) Inventors:
- **SONG, Jung Hoon**
  **Gwacheon-si, Gyeonggi-do 13835 (KR)**
- **NAM, Sang Cheol**
  **Seoul 02587 (KR)**
- **LEE, Sanghyuk**
  **Incheon 22405 (KR)**
- **CHOI, Kwon Young**
  **Seoul 07987 (KR)**
- **PARK, Inchul**
  **Incheon 22008 (KR)**
- **KWON, Ohmin**
  **Incheon 22018 (KR)**

(74) Representative: **Potter Clarkson**
**Chapel Quarter**
**Mount Street**
**Nottingham NG1 6HQ (GB)**

(54) **CATHODE ACTIVE MATERIAL, AND LITHIUM ION BATTERY INCLUDING SAME**

(57)     The present exemplary embodiments relate to a positive electrode active material and a lithium secondary battery including the same. According to an exemplary embodiment, a positive electrode active material for a lithium secondary battery including a metal oxide particle including nickel, cobalt and manganese, and five types of doping elements doped on the metal oxide particles is provided.

EP 4 266 424 A1

## Description

### Field of the Invention

The present exemplary embodiments relate to a positive electrode active material and a lithium secondary battery including the same.

### Description of the Related Art

Recently, due to the explosive demand for electric vehicles and the demand for increased mileage, the development of secondary batteries with high-capacity and a high energy density that can be applied to them is actively progressing worldwide. Particularly, in order to manufacture such a high-capacity battery, a high-capacity positive electrode active material must be used. Accordingly, a method of applying a nickel-cobalt-manganese based positive electrode active material having a high nickel content as a high-capacity positive electrode active material has been proposed. However, the nickel cobalt manganese positive electrode active material with high nickel content resultantly as the nickel content increases, has problems below. 1) efficiency reduction due to capacity reduction

2) formation of NiO rock salt structure due to surface oxygen generation and cycle characteristics deteriorated, and 3) resistance increase. Therefore, it is urgent to develop a positive electrode active material that can solve the problem of a nickel cobalt manganese positive electrode active material with a high nickel content.

## SUMMARY OF THE INVENTION

In the present embodiment, metal oxide particles including nickel, cobalt, manganese and aluminum are doped with five types of elements to solve the problem of performance deteriorated in positive electrode active materials with high nickel content and to significantly improve electrochemical characteristics at the same time. Accordingly, it is intended to provide a positive electrode active material and a lithium secondary battery containing it.

A positive electrode active material for a lithium secondary battery according to an exemplary embodiment may include a metal oxide particle including nickel, cobalt, manganese, and aluminum, and five types of doping elements doped on the metal oxide particle.

The five doping elements are Al, Nb, B, Zr and Ti.

The doping amount of the Al is 0.006 mol to 0.029 mol, based on 1 mol of the total of nickel, cobalt, manganese and doping elements.

The doping amount of the Nb is 0.00025 mol to 0.005 mol, based on 1 mol of the total of nickel, cobalt, manganese and doping elements.

The doping amount of the B is 0.001 mol to 0.015 mol, based on 1 mol of the total of nickel, cobalt, manganese and doping elements.

The doping amount of the Zr is 0.001 mol to 0.007 mol, based on 1 mol of the total of nickel, cobalt, manganese and doping elements.

The doping amount of the Ti ranges from 0.0002 mol to 0.0015 mol, based on 1 mol of the total of nickel, cobalt, manganese and doping elements.

The doping amount of the Nb, Al and Zr satisfies the relationship of Equation 1 below.

$$[\text{Equation 1}]$$

$$4 < ([Zr]+[Al])/[Nb] < 210$$

(In Equation 1, [Nb], [Al] and [Zr] mean the doping amount of each element based on 1 mole of the total sum of nickel, cobalt, manganese and doping elements)

The doping amount of the Nb, Ti and B satisfies the relationship of Equation 2 below.

$$[\text{Equation 2}]$$

$$3 < ([B]+[Ti])/[Nb] < 120$$

(In Equation 2, [Nb], [Ti] and [B] mean the doping amount of each element based on 1 mole of the total sum of nickel, cobalt, manganese and doping elements)
the positive electrode active material is represented by Chemical Formula 1 below.

[Chemical Formula 1]     $Li_a[Ni_xCo_yMn_z]_{1-t}(Al_hNb_iZr_jB_kTi_m)_tO_{2-p}X2_p$

(in the Chemical Formula 1,

X is one or more elements selected from the group containing F, N, and P,
a is $0.8 \leq a \leq 1.3$,
t is $0.008 \leq t \leq 0.05$,
$0.6 \leq x \leq 0.95$, $0 < y \leq 0.2$, $0 < z \leq 0.2$, $0.006 \leq h \leq 0.025$, $0.00025 \leq i \leq 0.005$, $0.001 \leq j \leq 0.007$, $0.006 \leq k \leq 0.029$, $0.0002 \leq m \leq 0.015$, and $0 \leq p \leq 0.02$.)

An initial diffusion coefficient of the positive electrode active material ranged from $6.91*10^{-9}m^2$/sec to $7.58*10^{-9}m^2$/sec.
A grain size of the metal oxide particle ranges from 1,036 A to 1,440 A.
A full width at half maximum (FWHM) values for the (110) planes of the metal oxide particle ranged from 0.126 to 0.204.
When measuring the X-ray diffraction pattern of the positive electrode active material for the lithium secondary battery, the ratio of the peak intensity of the (003) plane to the peak intensity of the (104) plane, I(003)/I(104), ranges from 1.186 to 1.204.
The content of nickel in the metal oxide particle may be 0.8 mol or more, based on 1 mol of the total of the nickel, cobalt and manganese.
A lithium secondary battery according to another exemplary embodiment may include a positive electrode including a positive electrode active material according to an exemplary embodiment, a negative electrode, and a non-aqueous electrolyte.
When the positive electrode active material according to the present embodiment is applied by doping at least five elements to a metal oxide particle including NCMA, it can significantly improve the room temperature I high temperature cycle-life characteristic, initial efficiency, initial resistance, resistance increase rate and thermal stability, while increasing the capacity of a lithium secondary battery.

## DETAILED DESCRIPTION OF THE EMBODIMENTS

The terms such as first, second, and third are used to describe various portions, components, regions, layers, and/or sections, but various parts, components, regions, layers, and/or sections are not limited to these terms. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.
Terminologies as used herein are to mention only a specific exemplary embodiment, and are not to limit the present invention. Singular forms used herein include plural forms as long as phrases do not clearly indicate an opposite meaning. The term "including/comprising" as used herein concretely indicates specific characteristics, regions, integer numbers, steps, operations, elements, and/or components, and is not to exclude presence or addition of other specific characteristics, regions, integer numbers, steps, operations, elements, and/or components.
When any portion is referred to as being "above" or "on" another portion, any portion may be directly above or on another portion or be above or on another portion with the other portion interposed therebetween. In contrast, when any portion is referred to as being "directly on" another portion, the other portion is not interposed between any portion and another portion.
Unless defined otherwise, all terms including technical terms and scientific terms as used herein have the same meaning as the meaning generally understood by a person of an ordinary skill in the art to which the present invention pertains. Terms defined in a generally used dictionary are additionally interpreted as having the meaning matched to the related art document and the currently disclosed contents and are not interpreted as ideal or formal meaning unless defined.
A positive electrode active material for a lithium secondary battery according to an exemplary embodiment may include a metal oxide particle including nickel, cobalt, manganese, and aluminum, and five types of doping elements doped on the metal oxide particle.
At this time, the five types of doping elements may be Al, Nb, B, Zr and Ti.

Selection of the doping element is important to secure cycle-life and various electrochemical performance by doping lithium metal oxide. Doping elements known to date include monovalent ions such as $Ag^+$ and $Na^+$; and divalent or multi-valent ions such as $Co^{2+}$, $Cu^{2+}$, $Mg^{2+}$, $Zn^{2+}$, $Ba^{2+}$, $Al^{3+}$, $Fe^{3+}$, $Cr^{3+}$, $Ga^{3+}$, $Zr^{4+}$, $Ti^{4+}$. Each of these elements has a different effect on the cycle-life and output characteristics of the battery.

In the present embodiment, by including Al, Nb, B, Zr, and Ti@@@among these doping elements, room temperature and high temperature cycle-life characteristic and thermal stability can be improved while securing high capacity, and initial resistance characteristic and resistance increase rate can be significantly reduced.

Specifically, when $Ti^{4+}$ is doped into the NCM layered structure, it is possible to stabilize the structure of the positive electrode active material by suppressing the movement of $Ni^{2+}$ to Li sites.

In addition, $Al^{3+}$ suppresses deterioration of the layered structure into a spinel structure due to the migration of Al ions to the tetragonal lattice site. The layered structure facilitates the insertion of Li ions, but the spinel structure does not allow Li ions to move smoothly.

Specifically, $Zr^{4+}$ serves as a kind of pillar because Zr ion occupies the Li site, and it relieves the contraction of the lithium ion path during the charging and discharging process to bring about stabilization of the layered structure. This phenomenon can increase cycle-life by reducing cation mixing and increasing lithium diffusion coefficient.

Also, Nb can improve initial capacity and initial efficiency.

When B (Boron) is doped with the doping element, the initial resistance can be reduced by reducing the crystal grain size during sintering of the positive electrode active material. In addition, it can increase the cycle-life characteristic and thermal decomposition temperature.

In the present embodiment, the doping amount of the Al may range from 0.006 mol to 0.029 mol, more specifically, from 0.0085 mol to 0.025 mol, based on 1 mol of the total of nickel, cobalt, manganese and doping elements. If the content of Al satisfies the range, it is possible to implement a lithium secondary battery with excellent initial efficiency and thermal stability, and significantly improved room temperature cycle-life and high temperature cycle-life.

Next, the doping amount of the Nb may range from 0.00025 mol to 0.005 mol, more specifically, from 0.0005 mol to 0.0025 mol, based on 1 mol of the total of nickel, cobalt, manganese and doping elements. When the doping amount of Nb satisfies the range, a very advantageous effect can be realized in that room temperature cycle-life, high temperature cycle-life, resistance increase rate and average leakage current value of the lithium secondary battery can all be improved. In addition, the diffusion coefficient of the lithium secondary battery increases and the resistance increase rate can be effectively reduced during impedance analysis.

The doping amount of B may range from 0.001 mole to 0.015 mole, more specifically, from 0.005 mole to 0.01 mole, based on 1 mole of the total amount of nickel, cobalt, manganese and doping elements. When the doping amount of B satisfies the range, the initial resistance value can be reduced because the crystal grain size is reduced during sintering of the positive electrode active material, and the room temperature and high temperature cycle-life characteristic and thermal decomposition temperature can be increased.

Next, the doping amount of the Zr may range from 0.001 mol to 0.007 mol, more specifically, from 0.002 mol to 0.005 mol or 0.0035 mol to 0.005 mol, based on 1 mol of the total of nickel, cobalt, manganese, aluminum and doping elements. If the Zr doping amount satisfies the range, the high temperature cycle-life and room temperature cycle-life characteristics of the lithium secondary battery can be significantly improved.

The doping amount of the Ti may range from 0.0002 mol to 0.0015 mol, specifically, from 0.0005 mol to 0.001 mol, based on 1 mol of the total amount of nickel, cobalt, manganese and doping elements. When the doping amount of Ti satisfies the range, excellent discharge capacity and efficiency can be secured, room temperature and high temperature cycle-life characteristics can be improved, and resistance increase rate and average leakage current value can be reduced.

In the present embodiment, doping amounts of the Nb, Al, and Zr may satisfy the relationship of Equation 1 below.

[Equation 1]

$$4 < ([Zr]+[Al])/[Nb] < 210$$

(In Equation 1, [Nb], [Al] and [Zr] mean the doping amount of each element based on 1 mole of the total sum of nickel, cobalt, manganese and doping elements)

More specifically, Equation 1 may be a range of 5 or more and 70 or less, or may be a range of 10 or more and 50 or less.

When Equation 1 satisfies the range, the structural stability is improved and the cycle characteristic and initial resistance increase rate are improved..

Meanwhile, the doping amounts of the Nb, Ti, and B may satisfy the relationship of Equation 2 below.

[Equation 2]

$$3 < ([B]+[Ti])/[Nb] < 120$$

(In Equation 2, [Nb], [Ti] and [B] mean the doping amount of each element based on 1 mole of the total sum of nickel, cobalt, manganese and doping elements)

More specifically, Equation 2 may be a range of 2 or more and 30 or less, or may be a range of 3 or more and 15 or less.

When Equation 2 satisfies the range, initial resistance, initial capacity and thermal stability are improved.

A positive electrode active material for a lithium secondary battery in the present embodiment may be expressed as Chemical Formula 1 below.

[Chemical Formula 1]        $Li_a[Ni_xCo_yMn_z]_{1-t}(Al_hNb_iZr_jB_kTi_m)_tO_{2-p}X2_p$

In the Chemical Formula 1,

X is one or more elements selected from the group containing F, N, and P, and Zr
a is $0.8 \leq a \leq 1.3$,
t is $0.008 \leq t \leq 0.05$,
$0.6 \leq x \leq 0.95$, $0 < y \leq 0.2$, $0 < z \leq 0.2$, $0.006 \leq h \leq 0.025$, $0.00025 \leq i \leq 0.005$, $0.001 \leq j \leq 0.007$, $0.006 \leq k \leq 0.029$, $0.0002 \leq m \leq 0.015$, and $0 \leq p \leq 0.02$.

In addition, the content of nickel in the metal oxide particle may be 0.8 mol or more and 0.99 mol or less, more specifically, 0.85 mol to 0.99 mol, based on 1 mol of the total of the nickel, cobalt and manganese.

As in the present embodiment, a positive electrode active material having a high power characteristic can be realized when the content of nickel is 0.8 or more based on 1 mol of the total of the nickel, cobalt, manganese, and aluminum in the metal oxide. Since the positive electrode active material of the present exemplary embodiment having such a composition has a high energy density per volume, the capacity of a battery to which it is applied can be improved, and is also suitable for use in an electric vehicle.

On the other hand, the initial diffusion coefficient of the positive electrode active material according to the present embodiment is $6.91*10^{-9}m^2/sec$ to $7.58*10^{-9}m^2/sec$, more specifically $7.03*10^{-9}m^2/sec$ to $7.58*10^{-9}m^2$ sec range, or $7.33*10^{-9}m^2/sec$ to $7.58*10^{-9}m^2/sec$. When the initial diffusion coefficient is satisfied whit the range, the movement of Li ion in the positive electrode material is effective, resulting in a high initial capacity and rate characteristic of the positive electrode material. On the other hand, if the diffusion coefficient is less than $6.91*10^{-9}m^2/sec$, the resistance in the positive electrode material increases, and as a result, the cycle characteristic is greatly reduced. When the diffusion coefficient exceeds $7.58*10^{-9}m^2/sec$, the structural instability increases and the cycle characteristic deteriorates.

Next, a grain size of the metal oxide particle may range from 1,036 A to 1,440 A, more specifically from 1,036 A to 1,086 A. When the grain size satisfies the range, the high temperature cycle-life is improved without reducing the initial capacity.

In addition, the full width at half maximum (FWHM) value of (110) planes of the metal oxide particle may range from 0.126 to 0.204, or more specifically from 0.170 to 0.204. When the full width at half maximum (FWHM) value for the (110) plane satisfies the range, it has a characteristic that the high temperature cycle-life is greatly improved.

When measuring the X-ray diffraction pattern of the positive electrode active material of the present embodiment, the ratio of the peak intensity of the (003) plane to the peak intensity of the (104) plane, I(003)/I(104), may range from 1.186 to 1.204.

In general, a peak intensity value means a peak height value or an integral area value obtained by integrating a peak area, and in the present embodiment, the peak intensity value means a peak area value.

If the peak intensity ratio I(003)/I(104) is included in the range, structural stabilization is promoted without a decrease in capacity, and the thermal safety of the positive electrode active material can be improved.

In addition, the peak intensity ratio I(003)/I(104) is a cation mixing index, and when the value of I(003)/I(104) decreases, the initial capacity and rate characteristic of the positive electrode active material may be deteriorated. However, in the present exemplary embodiment, since I(003)/I(104) satisfies the range of 1.186 to 1.204, an excellent positive electrode active material can be realized with capacitance and rate characteristics.

On the other hand, the positive electrode active material of the present exemplary embodiment may be a bi-modal form in which large-diameter particles and small-diameter particles are mixed. The large-diameter particles may have an average particle diameter D50 ranging from 10 μm to 20 μm, and the small-diameter particles may have an average particle diameter D50 ranging from 3 μm to 7 μm. At this time, of course, the large-diameter particle and the small-diameter particle may also be in the form of a secondary particle in which at least one primary particle is assembled. In addition, the mixing ratio of large-size particles and small-size particles may be 50 to 80 wt% of large-size particles based on entire 100 wt%. Due to this bimodal particle distribution, energy density can be improved.

In another exemplary embodiment, it provides a lithium secondary battery comprising: a positive electrode including a positive electrode active material according to one embodiment of the present invention, a negative electrode including a negative electrode active material, and an electrolyte positioned between the positive electrode and the negative electrode.

A description related to the positive electrode active material will be omitted because it is the same as that of an exemplary embodiment described above.

The positive electrode active material layer may include a binder and a conductive material.

The binder serves to attach the positive electrode active material particles well to each other and to attach the positive electrode active material to the current collector well.

The conductive material is used to impart conductivity to the electrode, and any electronic conductive material can be used without causing chemical change in the battery.

The negative electrode includes a current collector and a negative electrode active material layer formed on the current collector, and the negative electrode active material layer includes a negative electrode active material.

The negative electrode active material includes a material capable of intercalating/deintercalating lithium ions reversibly, lithium metal, an alloy of lithium metal, a material capable of doping and undoping lithium, or a transition metal oxide.

A material that can intercalate/deintercalate the lithium ion reversibly is a carbon material. In a lithium ion secondary battery, any generally-used carbon-based negative electrode active material can be used, and typical examples thereof are crystalline carbon and amorphous carbon, or combination thereof.

The alloy of the lithium metal is alloy of lithium and metal selected from the group consisting of Na, K, Rb, Cs, Fr, Be, Mg, Ca, Sr, Si, Sb, Pb, In, Zn, Ba, Ra, Ge, Al and Sn.

Materials capable of doping and undoping the lithium include Si, $SiO_x$ (0 < x < 2), Si-Y alloy (the Y is an element selected from the group consisting of an alkali metal, an alkaline earth metal, a group 13 element, a group 14 element, a transition metal, and a rare earth, and its combination thereof, but not Si), Sn, $SnO_2$, Sn-Y (the Y is an element selected from the group consisting of an alkali metal, an alkaline earth metal, a group 13 element, a group 14 element, a transition metal, a rare earth element and the combination thereof, not Sn), and the like.

Examples of the transition metal oxide include vanadium oxide and lithium vanadium oxide. The negative electrode active material layer also includes a binder and may optionally further include a conductive material.

The binder serves to attach the negative electrode active material particles well to each other and to attach the negative electrode active material to the current collector well.

The conductive material is used to impart conductivity to the electrode, and any electronic conductive material can be used without causing chemical change in the battery.

As the current collector, one selected from the group consisting of copper foil, nickel foil, stainless steel foil, titanium foil, nickel foam, copper foam, a conductive metal-coated polymer substrate, and a combination thereof may be used.

The negative electrode and positive electrode are prepared by mixing active material, conductive material and binder in a solvent to prepare an active material composition, and applying this composition to a current collector. Since such an electrode manufacturing method is widely known in the field, detailed description will be omitted in this specification. As the solvent, N-methylpyrrolidone and the like can be used, but is not limited thereto.

The electrolyte contains a non-aqueous organic solvent and a lithium salt.

The non-aqueous organic solvent serves as a medium through which ions involved in the electr°Chemical reaction of the battery can move.

The lithium salt is a material that dissolves in an organic solvent and acts as a supply source of lithium ion in the battery to enable basic operation of the lithium secondary battery and promotes the movement of lithium ion between the positive electrode and the negative electrode.

Depending on the type of lithium secondary battery, a separator may exist between the positive electrode and the negative electrode. As such a separator, polyethylene, polypropylene, polyvinylidene fluoride or a multilayer of two or more of these may be used, and polyethylene/polypropylene 2-layer separator, a mixed multilayer such as a polyethylene/polypropylene/polyethylene 3-layer separator, polypropylene/polyethylene/polypropylene 3-layer separator, can be used.

Lithium secondary batteries can be classified into lithium ion batteries, lithium ion polymer batteries and lithium polymer batteries according to the type of separator and electrolyte used, and can be classified into cylindrical, prismatic, coin-type, and pouch-type depending on the shape. It can be divided into bulk type and thin film type according to size. Since the structures and manufacturing methods of these batteries are well known in this field, detailed descriptions are omitted.

Hereinafter, an exemplary embodiment will be described in detail. However, this is presented as an example, and the present invention is not limited thereby, and the present invention is only defined by the range of claims to be described later.

**Preparation Example 1 - Preparation of NCM Precursor**

The positive electrode active material precursor was prepared by a general co-precipitation method.

$NiSO_4 \cdot 6H_2O$ was used as the nickel raw material, $CoSO_4 \cdot 7H_2O$ as the cobalt raw material, and $MnSO_4 \cdot H_2O$ as the manganese raw material. These raw materials were dissolved in distilled water to prepare a metal salt aqueous solution.

After preparing the co-precipitation reactor, $N_2$ was purged to prevent oxidation of metal ions during the co-precipitation reaction, and the temperature of the reactor was maintained at 50°C.

$NH_4(OH)$ was added to the co-precipitation reaction as a chelating agent, and NaOH was used for pH control. The precipitate obtained by the co-precipitation process was filtered, washed with distilled water, and then dried in a cake dryer at 180°C to prepare a positive electrode active material precursor.

The composition of the prepared precursor was $(Ni_{0.92}Co_{0.04}Mn_{0.04})(OH)_2$, the average particle diameter D50 of the large-size precursor was 14.3 $\mu$m, and the average particle diameter D50 of the small-size precursor was 4.5 $\mu$m.

**Exemplary embodiment 1 - 0.0035 mol Zr + 0.015 mol Al + 0.0001 mol Nb + 0.01 mol B + 0.001 mol Ti doping**

A mixture obtained by uniformly mixing the precursor prepared in Preparation Example 1, the lithium raw material and the doping raw material was fired in an oxygen atmosphere in a tube furnace. The sintering condition was maintained at 480°C for 5 hours and then at 740-780°C for 15 hours, and the heating speed was 5°C/min.

LiOH $H_2O$ (Samjeon Chemical, battery grade) was used as the lithium raw material used, and $ZrO_2$ (Aldrich, 3N), $Al(OH)_3$ (Aldrich, 3N), $TiO_2$(Aldrich, 3N), $H_3BO_3$(Aldrich, 3N), and $Nb_2O_5$ (Aldrich, 3N) were used as the doping raw materials.

At this time, the doping amount is expressed as M= $Ni_{0.92}Co_{0.04}Mn_{0.04}$ based on $LiNi_{0.92}Co_{0.04}Mn_{0.04}O_2$, which is not doped with the metal element, and the amount of doping material is adjusted so that M and the total amount of doping are 1 mol. That is, it has a $Li(M)_{1-x}(D)_xO_2$ (M=NCM, D=doping material) structure. The entire composition of the large particle size and small particle size positive electrode active materials doped with the five elements prepared in this way was $Li(M)_{0.9704}Zr_{0.0035}Al_{0.015}Ti_{0.001}B_{0.01}Nb_{0.0001}O_2$.

The sintered large particle size and small particle size positive electrode active material is uniformly mixed at a weight ratio of 80:20 (large particle size-small particle size) to obtain the positive electrode active material of Example 1 in a bi-modal form.

**Exemplary embodiment 2 - 0.0035 mol Zr + 0.015 mol Al + 0.00025 mol Nb + 0.01 mol B + 0.001 mol Ti doping**

A bimodal type positive electrode active material was prepared in the same manner as in Example 1, except that the amount of doping was adjusted using the precursor prepared in Preparation Example 1.

The entire composition of the positive electrode active material prepared according to exemplary embodiment 2 was $Li(M)_{0.97025}Zr_{0.0035}Al_{0.015}Ti_{0.001}B_{0.01}Nb_{0.00025}O_2$.

**Exemplary embodiment 3 - 0.0035 mol Zr + 0.015 mol Al + 0.0005 mol Nb + 0.01 mol B + 0.001 mol Ti doping**

A positive electrode active material in a bimodal form was prepared by the same method as in the exemplary embodiment 1, except that the amount of the doping material was adjusted using the precursor prepared in Preparation Example 1.

The entire composition of the positive electrode active material prepared according to exemplary embodiment 3 was $Li(M)_{0.97}Zr_{0.0035}Al_{0.015}Ti_{0.001}B_{0.01}Nb_{0.0005}O_2$.

**Exemplary embodiment 4 - 0.0035 mol Zr + 0.015 mol Al + 0.001 mol Nb + 0.01 mol B + 0.001 mol Ti doping**

A positive electrode active material in a bimodal form was prepared by the same method as in the exemplary embodiment 1, except that the amount of the doping material was adjusted using the precursor prepared in Preparation Example 1.

The entire composition of the positive electrode active material prepared according to exemplary embodiment 4 was $Li(M)_{0.9695}Zr_{0.0035}Al_{0.015}Ti_{0.001}B_{0.01}Nb_{0.001}O_2$.

**Exemplary embodiment 5 - 0.0035 mol Zr + 0.015 mol Al + 0.0025 mol Nb + 0.01 mol B + 0.001 mol Ti doping**

A positive electrode active material in a bimodal form was prepared by the same method as in the exemplary embodiment 1, except that the amount of the doping material was adjusted using the precursor prepared in Preparation Example 1.
The entire composition of the positive electrode active material prepared according to exemplary embodiment 5 was $Li(M)_{0.968}Zr_{0.0035}Al_{0.015}Ti_{0.001}B_{0.01}Nb_{0.0025}O_2$.

**Reference Example 1 - 0.0035 mol Zr + 0.015 mol Al + 0.005 mol Nb + 0.01 mol B + 0.001 mol Ti doping**

A positive electrode active material in a bimodal form was prepared by the same method as in the exemplary embodiment 1, except that the amount of the doping material was adjusted using the precursor prepared in Preparation Example 1.
The entire composition of the positive electrode active material prepared according to Reference Example 1 was $Li(M)_{0.9655}Zr_{0.0035}Al_{0.015}Ti_{0.001}B_{0.01}Nb_{0.005}O_2$.

**Reference Example 2 - 0.0035 mol Zr + 0.015 mol Al + 0.01 mol Nb + 0.01 mol B + 0.001 mol Ti doping**

A positive electrode active material in a bimodal form was prepared by the same method as in the exemplary embodiment 1, except that the amount of the doping material was adjusted using the precursor prepared in Preparation Example 1.
The entire composition of the positive electrode active material prepared according to Reference Example 2 was $Li(M)_{0.9605}Zr_{0.0035}Al_{0.015}Ti_{0.001}B_{0.01}Nb_{0.01}O_2$.

**Exemplary embodiment 6 - 0.002 mol Zr + 0.015 mol Al + 0.0025 mol Nb + 0.01 mol B + 0.001 mol Ti doping**

A positive electrode active material in a bimodal form was prepared by the same method as in the exemplary embodiment 1, except that the amount of the doping material was adjusted using the precursor prepared in Preparation Example 1.
The entire composition of the positive electrode active material prepared according to exemplary embodiment 6 was $Li(M)_{0.9719}Zr_{0.002}Al_{0.015}Ti_{0.001}B_{0.01}Nb_{0.0025}O_2$.

**Exemplary embodiment 7 - 0.005 mol Zr + 0.015 mol Al + 0.0025 mol Nb + 0.01 mol B + 0.001 mol Ti doping**

A positive electrode active material in a bimodal form was prepared in the same manner as in the exemplary embodiment 1, except that the amount of the doping material was adjusted using the precursor prepared in Preparation Example 1.
The entire composition of the positive electrode active material prepared according to exemplary embodiment 7 was $Li(M)_{0.9665}Zr_{0.005}Al_{0.015}Ti_{0.001}B_{0.01}Nb_{0.0025}O_2$.

**Reference Example 3 - 0.008 mol Zr + 0.015 mol Al + 0.0025 mol Nb + 0.01 mol B + 0.001 mol Ti doping**

A positive electrode active material in a bimodal form was manufactured by the same method as in the exemplary embodiment 1, except that the amount of the aluminum raw material and the doping raw material was adjusted using the precursor prepared in Preparation Example 1.
The entire composition of the positive electrode active material prepared according to Reference Example 3 was $Li(M)_{0.9635}Zr_{0.008}Al_{0.015}Ti_{0.001}B_{0.01}Nb_{0.0025}O_2$.

**Reference Example 4 - 0.0035 mol Zr + 0.005 mol Al + 0.0025 mol Nb + 0.01 mol B + 0.001 mol Ti doping**

A positive electrode active material in a bimodal form was prepared in the same manner as in the exemplary embodiment 1, except that the amount of the doping material was adjusted using the precursor prepared in Preparation Example 1.
The entire composition of the positive electrode active material prepared according to Reference Example 4 was $Li(M)_{0.978}Zr_{0.0035}Al_{0.005}Ti_{0.001}B_{0.01}Nb_{0.0025}O_2$.

**Exemplary embodiment 8 - 0.0035 mol Zr + 0.0085 mol Al + 0.0025 mol Nb + 0.01 mol B + 0.001 mol Ti doping**

A positive electrode active material in a bimodal form was prepared in the same manner as in the exemplary embodiment 1, except that the amount of the doping material was adjusted using the precursor prepared in Preparation Example 1.

The entire composition of the positive electrode active material prepared according to exemplary embodiment 8 was $Li(M)_{0.9745}Zr_{0.0035}Al_{0.0085}Ti_{0.001}B_{0.01}Nb_{0.0025}O_2$.

**Exemplary embodiment 9 - 0.0035 mol Zr + 0.02 mol Al + 0.0025 mol Nb + 0.01 mol B + 0.001 mol Ti doping**

A positive electrode active material in a bimodal form was prepared by the same method as in the exemplary embodiment 1, except that the amount of the doping material was adjusted using the precursor prepared in Preparation Example 1.

The entire composition of the positive electrode active material prepared according to exemplary embodiment 9 was $Li(M)_{0.963}Zr_{0.0035}Al_{0.02}Ti_{0.001}Nb_{0.0025}O_2$.

**Reference Example 5 - 0.0035 mol Zr + 0.025 mol Al + 0.0025 mol Nb + 0.01 mol B + 0.001 mol Ti doping**

A positive electrode active material in a bimodal form was prepared in the same manner as in the exemplary embodiment 1, except that the amount of the doping material was adjusted using the precursor prepared in Preparation Example 1.

The entire composition of the positive electrode active material prepared according to Reference Example 3 was $Li(M)_{0.958}Zr_{0.0035}Al_{0.025}Ti_{0.001}B_{0.01}Nb_{0.0025}O_2$.

**Reference Example 6 - 0.0035 mol Zr + 0.015 mol Al + 0.0025 mol Nb + 0.01 mol B + 0.0001 mol Ti doping**

A positive electrode active material in a bimodal form was prepared by the same method as in the exemplary embodiment 1, except that the amount of the doping material was adjusted using the precursor prepared in Preparation Example 1.

The entire composition of the positive electrode active material prepared according to Reference Example 6 was $Li(M)_{0.9689}Zr_{0.0035}Al_{0.015}Ti_{0.0001}B_{0.01}Nb_{0.0025}O_2$.

**Exemplary embodiment 10 - 0.0035 mol Zr + 0.015 mol Al + 0.0025 mol Nb + 0.01 mol B + 0.0005 mol Ti doping**

A positive electrode active material in a bimodal form was prepared by the same method as in the exemplary embodiment 1, except that the amount of the doping material was adjusted using the precursor prepared in Preparation Example 1.

The entire composition of the positive electrode active material prepared according to exemplary embodiment 10 was $Li(M)_{0.9685}Zr_{0.0035}Al_{0.015}Ti_{0.0005}B_{0.01}Nb_{0.0025}O_2$.

**Exemplary embodiment 11 - 0.0035 mol Zr + 0.015 mol Al + 0.0025 mol Nb + 0.01 mol B + 0.0015 mol Ti doping**

A positive electrode active material in a bimodal form was prepared by the same method as in the exemplary embodiment 1, except that the amount of the doping material was adjusted using the precursor prepared in Preparation Example 1.

The entire composition of the positive electrode active material prepared according to exemplary embodiment 11 was $Li(M)_{0.9675}Zr_{0.0035}Al_{0.015}Ti_{0.0015}B_{0.01}Nb_{0.0025}O_2$.

**Reference Example 7 - 0.0035 mol Zr + 0.015 mol Al + 0.0025 mol Nb + 0.01 mol B + 0.002 mol Ti doping**

A positive electrode active material in a bimodal form was prepared by the same method as in the exemplary embodiment 1, except that the amount of the doping material was adjusted using the precursor prepared in Preparation Example 1.

The entire composition of the positive electrode active material prepared according to Reference Example 7 was $Li(M)_{0.967}Zr_{0.0035}Al_{0.015}Ti_{0.002}B_{0.01}Nb_{0.0025}O_2$.

**Reference Example 8 - 0.0035 mol Zr + 0.015 mol Al + 0.0025 mol Nb + 0.001 mol B + 0.001 mol Ti doping**

A positive electrode active material in a bimodal form was prepared in the same manner as in the exemplary embodiment 1, except that the amount of the doping material was adjusted using the precursor prepared in Preparation Example 1.

The entire composition of the positive electrode active material prepared according to Reference Example 8 was $Li(M)_{0.977}Zr_{0.0035}Al_{0.015}Ti_{0.001}B_{0.001}Nb_{0.0025}O_2$.

**Exemplary embodiment 12 - 0.0035 mol Zr + 0.015 mol Al + 0.0025 mol Nb + 0.005 mol B + 0.001 mol Ti doping**

A positive electrode active material in a bimodal form was prepared in the same manner as in the exemplary embodiment 1, except that the amount of the doping material was adjusted using the precursor prepared in Preparation Example 1.

The entire composition of the positive electrode active material prepared according to exemplary embodiment 12 was $Li(M)_{0.973}Zr_{0.0035}Al_{0.015}Ti_{0.001}B_{0.005}Nb_{0.0025}O_2$.

**Reference Example 9 - 0.0035 mol Zr + 0.015 mol Al + 0.0025 mol Nb + 0.015 mol B + 0.001 mol Ti doping**

A positive electrode active material in a bimodal form was prepared in the same manner as in the exemplary embodiment 1, except that the amount of the doping material was adjusted using the precursor prepared in Preparation Example 1.

The entire composition of the positive electrode active material prepared according to Reference Example 9 was $Li(M)_{0.963}Zr_{0.0035}Al_{0.015}Ti_{0.001}B_{0.015}Nb_{0.0025}O_2$.

The doping amount and entire composition of the positive electrode active material prepared according to the Comparative Example 1, Example Embodiment 2 to 12 and Reference Example 1 to 9 are shown in the following table.

(Table 1)

| Catego ry | Dopant | | | | | Composition of positive electrode active material entire |
|---|---|---|---|---|---|---|
| | Al | Zr | Nb | B | Ti | |
| exempl ary embodi ment1 | 0.015 | 0.0035 | 0.0001 | 0.01 | 0.001 | $Li(M)_{0.9704}Zr_{0.0035}Al_{0.015}Ti_{0.001}B_{0.01}Nb_{0.0001}O_2$ |
| Compa rative Exampl e1 | 0.015 | 0.0035 | 0 | 0.01 | 0.001 | $Li(M)_{0.9705}Zr_{0.0035}Al_{0.015}Ti_{0.001}B_{0.01}O_2$ |
| exempl ary embodi ment2 | 0.015 | 0.0035 | 0.00025 | 0.01 | 0.001 | $Li(M)_{0.97025}Zr_{0.0035}Al_{0.015}Ti_{0.015}B_{0.01}Nb_{0.00025}O_2$ |
| exempl ary embodi ment3 | 0.015 | 0.0035 | 0.0005 | 0.01 | 0.001 | $Li(M)_{0.97}Zr_{0.0035}Al_{0.015}Ti_{0.001}B_{0.01}Nb_{0.0005}O_2$ |
| exempl ary embodi ment4 | 0.015 | 0.0035 | 0.001 | 0.01 | 0.001 | $Li(M)_{0.9695}Zr_{0.0035}Al_{0.015}Ti_{0.001}B_{0.01}Nb_{0.001}O_2$ |
| exempl ary embodi ment5 | 0.015 | 0.0035 | 0.0025 | 0.01 | 0.001 | $Li(M)_{0.968}Zr_{0.0035}Al_{0.015}Ti_{0.001}B_{0.01}Nb_{0.0025}O_2$ |

(continued)

| Catego ry | Dopant | | | | | Composition of positive electrode active material entire |
|---|---|---|---|---|---|---|
| | Al | Zr | Nb | B | Ti | |
| Refere nce exampl e1 | 0.015 | 0.0035 | 0.005 | 0.01 | 0.001 | $Li(M)_{0.9655}Zr_{0.0035}Al_{0.015}Ti_{0.001}B_{0.01}Nb_{0.005}O_2$ |
| Refere nce exampl e2 | 0.015 | 0.0035 | 0.01 | 0.01 | 0.001 | $Li(M)_{0.9605}Zr_{0.0035}Al_{0.015}Ti_{0.001}B_{0.01}Nb_{0.01}O_2$ |
| exempl ary embodi ment6 | 0.015 | 0.002 | 0.0025 | 0.01 | 0.001 | $Li(M)_{0.9695}Zr_{0.002}Al_{0.015}Ti_{0.01}B_{0.01}Nb_{0.0025}O_2$ |
| exempl ary embodi ment7 | 0.015 | 0.005 | 0.0025 | 0.01 | 0.001 | $Li(M)_{0.9665}Zr_{0.005}Al_{0.015}Ti_{0.001}B_{0.01}Nb_{0.0025}O_2$ |
| Refere nce exampl e 3 | 0.015 | 0.008 | 0.0025 | 0.01 | 0.001 | $Li(M)_{0.9635}Zr_{0.008}Al_{0.015}Ti_{0.001}B_{0.01}Nb_{0.0025}O_2$ |
| Refere nce exampl e 4 | 0.005 | 0.0035 | 0.0025 | 0.01 | 0.001 | $Li(M)_{0.978}Zr_{0.0035}Al_{0.005}Ti_{0.001}B_{0.01}Nb_{0.0025}O_2$ |
| exempl ary embodi ment8 | 0.0085 | 0.0035 | 0.0025 | 0.01 | 0.001 | $Li(M)_{0.9745}Zr_{0.0035}Al_{0.0085}Ti_{0.001}B_{0.01}Nb_{0.0025}O_2$ |
| exempl ary embodi ment9 | 0.02 | 0.0035 | 0.0025 | 0.01 | 0.001 | $Li(M)_{0.963}Zr_{0.0035}Al_{0.02}Ti_{0.001}B_{0.01}Nb_{0.0025}O_2$ |
| Refere nce exampl e 5 | 0.025 | 0.0035 | 0.0025 | 0.01 | 0.001 | $Li(M)_{0.958}Zr_{0.0035}Al_{0.025}Ti_{0.001}B_{0.01}Nb_{0.0025}O_2$ |
| Refere nce exampl e6 | 0.015 | 0.0035 | 0.0025 | 0.01 | 0.0001 | $Li(M)_{0.9689}Zr_{0.0035}Al_{0.015}Ti_{0.0001}B_{0.01}Nb_{0.0025}O_2$ |
| exempl ary embodi ment10 | 0.015 | 0.0035 | 0.0025 | 0.01 | 0.0005 | $Li(M)_{0.9685}Zr_{0.0035}Al_{0.015}Ti_{0.0005}B_{0.01}Nb_{0.0025}O_2$ |
| exempl ary embodi ment11 | 0.015 | 0.0035 | 0.0025 | 0.01 | 0.0015 | $Li(M)_{0.9675}Zr_{0.0035}Al_{0.015}Ti_{0.0015}B_{0.01}Nb_{0.0025}O_2$ |
| Refere nce exampl e 7 | 0.015 | 0.0035 | 0.0025 | 0.01 | 0.002 | $Li(M)_{0.976}Zr_{0.0035}Al_{0.015}Ti_{0.002}B_{0.01}Nb_{0.0025}O_2$ |

(continued)

| Catego ry | Dopant | | | | | Composition of positive electrode active material entire |
|---|---|---|---|---|---|---|
| | Al | Zr | Nb | B | Ti | |
| Refere nce exampl e 8 | 0.015 | 0.0035 | 0.0025 | 0.001 | 0.001 | $Li(M)_{0.977}Zr_{0.0035}Al_{0.015}Ti_{0.001}B_{0.001}Nb_{0.0025}O_2$ |
| exempl ary embodi ment12 | 0.015 | 0.0035 | 0.0025 | 0.005 | 0.001 | $Li(M)_{0.973}Zr_{0.0035}Al_{0.015}Ti_{0.001}B_{0.005}Nb_{0.0025}O_2$ |
| Refere nce exampl e 9 | 0.015 | 0.0035 | 0.0025 | 0.015 | 0.001 | $Li(M)_{0.963}Zr_{0.0035}Al_{0.015}Ti_{0.001}B_{0.015}Nb_{0.0025}O_2$ |

**Comparative Example 2 - 0.8 mol Ni + 0.0035 mol Zr + 0.015 mol Al + 0.01 mol B + 0.001 mol Ti doped**

Large-size and small-size precursors having a composition of $(Ni_{0.80}Co_{0.10}Mn_{0.10})(OH)_2$ were prepared by the same method as in Preparation Example 1.
Next, a positive electrode active material in a bimodal form was prepared by the same method as in the exemplary embodiment 1, except that the amount of the doping material was adjusted using the precursor.
The entire composition of the positive electrode active material prepared according to Comparative Example 2 was $Li(Ni_{0.80}Co_{0.10}Mn_{0.10})_{0.9705}Zr_{0.0035}Al_{0.015}Ti_{0.001}B_{0.01}O_2$.

**Comparative Example 3 - 0.83 mol Ni + 0.0035 mol Zr + 0.015 mol Al + 0.01 mol B + 0.001 mol Ti doping**

Large particle size and small particle size precursors having a composition of $(Ni_{0.83}Co_{0.12}Mn_{0.05})(OH)_2$ were prepared by the same method as in Preparation Example 1.
Next, a positive electrode active material in a bimodal form was prepared by the same method as in the exemplary embodiment 1, except that the amount of the doping material was adjusted using the precursor.
The entire composition of the positive electrode active material prepared according to Comparative Example 3 was $Li(Ni_{0.83}Co_{0.12}Mn_{0.05})_{0.9705}Zr_{0.0035}Al_{0.015}Ti_{0.001}B_{0.01}O_2$.

**Comparative Example 4 - 0.85 mol Ni + 0.0035 mol Zr + 0.015 mol Al + 0.01 mol B + 0.001 mol Ti doping**

Large-size and small-size precursors having a composition of $(Ni_{0.85}Co_{0.075}Mn_{0.075})(OH)_2$ were prepared by the same method as in Preparation Example 1.
Next, a positive electrode active material in a bimodal form was prepared by the same method as in the exemplary embodiment 1, except that the amount of the doping material was adjusted using the precursor.
The entire composition of the positive electrode active material prepared according to Comparative Example 4 was $Li(Ni_{0.85}Co_{0.075}Mn_{0.075})_{0.9705}Zr_{0.0035}Al_{0.015}Ti_{0.001}B_{0.01}O_2$.

**Comparative Example 5 - 0.86 mol Ni + 0.0035 mol Zr + 0.015 mol Al + 0.01 mol B + 0.001 mol Ti doping**

Large particle size and small particle size precursors having a composition of $(Ni_{0.86}Co_{0.07}Mn_{0.07})(OH)_2$ were prepared by the same method as in Preparation Example 1.
Next, a positive electrode active material in a bimodal form was prepared by the same method as in the exemplary embodiment 1, except that the amount of the doping material was adjusted using the precursor.
The entire composition of the positive electrode active material prepared according to Comparative Example 5 was $Li(Ni_{0.86}Co_{0.06}Mn_{0.06})_{0.9705}Zr_{0.0035}Al_{0.015}Ti_{0.001}B_{0.01}O_2$.

**Comparative Example 6 - 0.88 mol Ni + 0.0035 mol Zr + 0.015 mol Al + 0.01 mol B + 0.001 mol Ti doping**

Large particle size and small particle size precursors having a composition of $(Ni_{0.88}Co_{0.05}Mn_{0.07})(OH)_2$ were prepared by the same method as in Preparation Example 1.
Next, a positive electrode active material in a bimodal form was prepared by the same method as in the exemplary embodiment 1, except that the amount of the doping material was adjusted using the precursor.

The entire composition of the positive electrode active material prepared according to Comparative Example 6 was $Li(Ni_{0.88}Co_{0.05}Mn_{0.07})_{0.9705}Zr_{0.0035}Al_{0.015}Ti_{0.001}B_{0.01}O_2$.

**Reference Example 10 - 0.8 mol Ni + doping same as exemplary embodiment 5**

Large-size and small-size precursors having a composition of $(Ni_{0.80}Co_{0.10}Mn_{0.10})(OH)_2$ were prepared by the same method as in Preparation Example 1.

Next, a bimodal type positive electrode active material was prepared by the same method as in Example Embodiment 5, except for using the precursor.

The entire composition of the positive electrode active material prepared according to Reference Example 10 was $Li(Ni_{0.80}Co_{0.10}Mn_{0.10})_{0.968}Zr_{0.0035}Al_{0.015}Ti_{0.001}B_{0.01}Nb_{0.0025}O_2$.

**Reference Example 11 - 0.83 mol Ni + Same doping as Example 5**

Large particle size and small particle size precursors having a composition of $(Ni_{0.83}Co_{0.12}Mn_{0.05})(OH)_2$ were prepared by the same method as in Preparation Example 1.

Next, a bimodal type positive electrode active material was prepared by the same method as in Example Embodiment 5, except for using the precursor.

The entire composition of the positive electrode active material prepared according to Reference Example 11 was $Li(Ni_{0.83}Co_{0.12}Mn_{0.05})_{0.968}Zr_{0.0035}Al_{0.015}Ti_{0.001}B_{0.01}NB_{0.0025}O_2$.

**Exemplary embodiment 13 - 0.85 mol Ni + Same doping as exemplary embodiment 5**

Large-size and small-size precursors having a composition of $(Ni_{0.85}Co_{0.07}Mn_{0.08})(OH)_2$ were prepared by the same method as in Preparation Example 1.

Next, a bimodal type positive electrode active material was prepared by the same method as in Example Embodiment 5, except for using the precursor.

The entire composition of the positive electrode active material prepared according to exemplary embodiment 13 was $Li(Ni_{0.85}Co_{0.07}Mn_{0.08})_{0.968}Zr_{0.0035}Al_{0.015}Ti_{0.001}B_{0.01}Nb_{0.0025}O_2$.

**Exemplary embodiment 14 - 0.86 mol Ni + Same doping as exemplary embodiment 5**

Large particle size and small particle size precursors having a composition of $(Ni_{0.86}Co_{0.07}Mn_{0.07})(OH)_2$ were prepared by the same method as in Preparation Example 1.

Next, a bimodal type positive electrode active material was prepared by the same method as in the exemplary embodiment 5, except for using the precursor.

The entire composition of the positive electrode active material prepared according to exemplary embodiment 14 was $Li(Ni_{0.86}Co_{0.07}Mn_{0.07})_{0.968}Zr_{0.0035}Al_{0.015}Ti_{0.001}B_{0.01}Nb_{0.0025}O_2$.

**Exemplary embodiment 15 - 0.88 mol Ni Same doping as exemplary embodiment 5**

Large particle size and small particle size precursors having a composition of $(Ni_{0.88}Co_{0.05}Mn_{0.07})(OH)_2$ were prepared by the same method as in Preparation Example 1.

Next, a bimodal type positive electrode active material was prepared by the same method as in Example Embodiment 5, except for using the precursor.

The entire composition of the positive electrode active material prepared according to exemplary embodiment 15 was $Li(Ni_{0.88}CO_{0.05}Mn_{0.07})_{0.968}Zr_{0.0035}Al_{0.015}Ti_{0.001}B_{0.01}Nb_{0.0025}O_2$.

The precursor composition and doping amount of the positive electrode active material prepared according to Comparative Example 2 to 6 and Example Embodiment 13 to 15 and Reference Examples 10 to 11 are shown in the following table.

(Table 2)

| Category | Composition of precursor | Dopant | | | | |
|---|---|---|---|---|---|---|
| | | Al | Zr | Nb | B | Ti |
| Comparative Example 2 | $(Ni_{0.80}Co_{0.10}Mn_{0.10}, OH)_2$ | 0.015 | 0.0035 | - | 0.01 | 0.001 |

(continued)

| Category | Composition of precursor | Dopant | | | | |
|---|---|---|---|---|---|---|
| | | Al | Zr | Nb | B | Ti |
| Comparative Example 3 | $(Ni_{0.83}Co_{0.12}Mn_{0.05}, OH)_2$ | 0.015 | 0.0035 | - | 0.01 | 0.001 |
| Comparative Example 4 | $(Ni_{0.85}Co_{0.075}Mn_{0.075}, OH)_2$ | 0.015 | 0.0035 | - | 0.01 | 0.001 |
| Comparative Example 5 | $(Ni_{0.86}Co_{0.07}Mn_{0.07}, OH)_2$ | 0.015 | 0.0035 | - | 0.01 | 0.001 |
| Comparative Example 6 | $(Ni_{0.88}Co_{0.05}Mn_{0.07}, OH)_2$ | 0.015 | 0.0035 | - | 0.01 | 0.001 |
| Reference example 10 | $(Ni_{0.80}Co_{0.10}Mn_{0.10}, OH)_2$ | 0.015 | 0.0035 | 0.0025 | 0.01 | 0.001 |
| Reference example 11 | $(Ni_{0.83}Co_{0.10}Mn_{0.05}, OH)_2$ | 0.015 | 0.0035 | 0.0025 | 0.01 | 0.001 |
| exemplary embodiment 13 | $(Ni_{0.85}Co_{0.075}Mn_{0.075}, OH)_2$ | 0.015 | 0.0035 | 0.0025 | 0.01 | 0.001 |
| exemplary embodiment 14 | $(Ni_{0.86}Co_{0.07}Mn_{0.07}, OH)_2$ | 0.015 | 0.0035 | 0.0025 | 0.01 | 0.001 |
| exemplary embodiment 15 | $(Ni_{0.88}Co_{0.05}Mn_{0.07}, OH)_2$ | 0.015 | 0.0035 | 0.0025 | 0.01 | 0.001 |

**Experimental Example 1 - XRD 분석 result**

The lattice constant of the positive electrode active material prepared according to Exemplary Embodiment 1 to 5, Reference Examples 1 and 2, and Comparative Example 1 was obtained by X-ray diffraction measurement using CuKa rays.

The measured a-axis length, b-axis length and c-axis length are shown in Table 1 below.

The measured a-axis length, b-axis length and c-axis length are shown in Table 3 below.

Next, for crystallographic examination by doping, Rietveld analysis was performed using commercially available software, the High Score Plus 4.0 program, and the results are shown in Table 3. The XRD measurement range was performed at 10°-130°, and fitting was performed through Rietveld refinement. GOF (Goodness of Fitness) values were matched within 2.0.

XRD equipment (Panalytical's X'pert3 powder diffraction) was used to measure the intensity (peak area) of (003) and (104) planes and the intensity of (110) planes at a scan speed (°/s) of 0.328. From this result, the Full Width at Half Maximum (FWHM) of (110), and I(003)/I(104) was obtained and shown in Table 3.

In addition, in all of the measured samples, the (003) plane was well developed as the main peak around 18.7°. It was confirmed that splitting of (006)/(102) peak between 37.5° and 38.5° and (108)/(110) peak between 63.5° and 35.5° appeared. Accordingly, it was found to have good crystalline ordering of the hexagonal layer, and it was found to exhibit a typical $\alpha$-NaFeO$_2$ (space group R-3m) structure.

(Table 3)

| Category | a | b | c | unit cell volume | I(003)/I(104) (strength standard) | I(003)/I(104) (area standard) | FWHM of 110 plane | Grain size (A) |
|---|---|---|---|---|---|---|---|---|
| Comparative Example1 | 2.8720 | 2.8720 | 14.1875 | 101.3783 | 1.185 | 1.081 | 0.126 | 1460 |
| exemplary embodiment1 | 2.8723 | 2.8723 | 14.1891 | 101.3946 | 1.186 | 1.082 | 0.126 | 1440 |
| exemplary embodiment2 | 2.8725 | 2.8725 | 14.1894 | 101.5708 | 1.189 | 1.085 | 0.149 | 1200 |
| exemplary embodiment3 | 2.8738 | 2.8738 | 14.2012 | 101.6231 | 1.201 | 1.096 | 0.170 | 1086 |
| exemplary embodiment4 | 2.8744 | 2.8744 | 14.2026 | 101.6979 | 1.215 | 1.108 | 0.188 | 1065 |

(continued)

| Category | a | b | c | unit cell volume | I(003)/I(104) (strength standard) | I(003)/I(104) (area standard) | FWHM of 110 plane | Grain size (A) |
|---|---|---|---|---|---|---|---|---|
| exemplary embodiment5 | 2.8752 | 2.8752 | 14.2054 | 101.6613 | 1.204 | 1.098 | 0.204 | 1036 |
| Reference example 1 | 2.8750 | 2.8750 | 14.2020 | 101.6493 | 1.214 | 1.107 | 0.224 | 786 |
| Reference example 2 | 2.8748 | 2.8748 | 14.2023 | 101.3783 | 1.211 | 1.105 | 0.254 | 663 |

Referring to Table 3, it can be seen that the factor values of the XRD analysis result crystal structure are changed according to the doping element and doping amount.

Specifically, compared to the positive electrode active material of Comparative Example 1 in which NCM active material is doped with Zr, Al, Ti, and B, it can be seen that the FWHM value of the (110) plane of Examples 1 to 5, and Reference example 1 and 2, in which NCM is doped with Zr, Nb, Ti, B and NB, is increased and the grain size is reduced. In addition, it can be seen that the values of a and b, which are crystal structure constants, have maximum values in Example Embodiment 4 and the value of c has a maximum value in Example Embodiment 5. It was found that the unit cell volume also had a maximum value in Example 4. The intensity ratio and area ratio of (003)/(104), which represents the cation mixing index, shows the highest tendency in Example 3, so that the doping of an appropriate amount of Nb has an effect of suppressing cation mixing.

That is, in the present exemplary embodiment, it can be confirmed that the doping amount of Nb may range from 0.0001 mol to 0.005 mol, preferably from 0.0001 mol to 0.0025 mol, based on 1 mol of the total of nickel, cobalt, manganese and doping elements. can

**Experimental Example 2 - Electrochemical evaluation**

**(1) coin-type half-cell fabrication**

After manufacturing a CR2032 coin cell using the positive electrode active material manufactured as described above, an electrochemical evaluation was conducted.

Positive electrode active material, Denka black conductive material, and polyvinylidene fluoride binder (trade name: KF1100) were mixed at a weight ratio of 92.5:3.5:4, and this mixture was added to N-Methyl-2-pyrrolidone solvent to have a solid content of about 30 wt% to prepare a positive electrode active material slurry.

The slurry was coated on aluminum foil (Al foil, thickness: 15 $\mu$m), which is a positive electrode current collector, using a doctor blade (Doctor blade), dried, and rolled to prepare a positive electrode. The loading amount of the positive electrode was 14.6 mg/cm$^2$, and the rolling density was 3.1 g/cm$^3$.

A 2032 coin-type half cell was prepared by a conventional method using the positive electrode, lithium metal negative electrode (300 $\mu$m, MTI), electrolyte solution and polypropylene separator. The electrolyte solution is the product obtained by dissolving 1M LiPF$_6$ in a mixed solvent of ethylene carbonate (EC), dimethyl carbonate (DMC) and ethylmethyl carbonate (EMC) (mixing ratio EC:DMC:EMC=3:4:3 volume ratio), and 3 wt% of vinylene carbonate was added to 100 wt% of the entire solution.

**(2) Evaluation of charge and discharge characteristics**

After aging the prepared coin-type half cell at room temperature 25 °C for 10 hours, charging and discharging were performed.

The capacity evaluation was based on 205mAh/g, and the charge and discharge conditions were constant current (CC) / constant voltage (CV) 2.5V to 4.25V, and 1/20C cut-off.

For initial capacity, discharge capacity was measured after 0.1C charge/0.1C discharge, and initial efficiency was calculated after 0.2C charge/0.2C discharge, and the results are shown in Table 4 below.

**(3) Cycle-life characteristic measurement**

The room temperature cycle-life characteristic was measured at room temperature 25°C, and the high temperature cycle-life characteristic was measured 30 times in 0.3C charge/0.3C discharge condition at high temperature 45°C.

**(4) Resistance characteristic measurement**

The room temperature initial resistance (DC internal resistance: Direct current internal resistance (DC-IR)) is the constant current-constant voltage 2.5V to 4.25V at 25°C, 1/20C cut-off condition, 0.2C charging and 0.2 discharge discharge was performed once, and the voltage value was measured 60 seconds after applying the discharge current at 4.25V charge 100%, and then it was calculated.
The resistance increase rate is measured in the same way as the initial resistance measurement method after 30 cycle compared to the resistance initially measured at room temperature 25°C (room temperature initial resistance), and the increase rate is converted into percentage (%).
The average leakage current was measured by a method in which current generation was measured for 120 hours and then the average value was obtained, when the half cell was maintained at 4.7V at a high temperature of 45 °C.

**(5) Thermal stability evaluation**

In the differential scanning calorimetry (DSC) analysis, after charging the half cell from the initial 0.1C charging condition to 4.25V, the half cell is disassembled to obtain only the positive electrode separately, and the positive electrode is washed 5 times with dimethyl carbonate. After impregnation of the positive electrode washed in the crucible for DSC with electrolyte solution, while raising the temperature to 265 °C, the DSC peak temperature and calorific value result obtained by measuring the caloric change using Mettler Toledo's DSC1 star system as a DSC device.

**Experimental Example 2-1. Effect according to B content**

Table 4 shows the electrochemical characteristic evaluation results performed by the method of Experimental Example 2 for the positive electrode active material prepared according to Exemplary Embodiment 1 to 5, Reference Example 1 to 2 and Comparative Example 1.

(Table 4)

| | discharge capacity (mAh/g) | Initial efficiency (%) | room temperature cycle-life (%) | High temperature cycle-life (%) | room temperature initial resistance ($\Omega$) | Resistance increase rate (%) | average leakage current (mA) | DSC peak temperature (°C) |
|---|---|---|---|---|---|---|---|---|
| Comparative Example1 | 215.5 | 90.1 | 88.7 | 85.7 | 26.5 | 91.2 | 0.34 | 227 |
| exemplary embodiment1 | 217.1 | 91.9 | 90.8 | 90.4 | 25.4 | 88.7 | 0.30 | 227 |
| exemplary embodiment2 | 217.5 | 92.1 | 92.1 | 91.0 | 23.1 | 78.6 | 0.30 | 227 |
| exemplary embodiment3 | 221.0 | 94.5 | 93.2 | 93.0 | 22.4 | 47.2 | 0.22 | 231 |
| exemplary embodiment4 | 222.4 | 94.6 | 96.1 | 95.0 | 22.5 | 45.5 | 0.21 | 230 |
| exemplary embodiment5 | 226.8 | 94.9 | 94.8 | 94.5 | 22.4 | 69.8 | 0.20 | 230 |
| Reference example 1 | 214.0 | 92.1 | 90.1 | 88.7 | 24.6 | 155.7 | 0.20 | 230 |
| Reference example 2 | 210.6 | 88.7 | 77.6 | 71.3 | 30.1 | 317.1 | 0.21 | 235 |

Exemplary Embodiments 1 to 5 and Reference Examples 1 to 2 are results of measuring electrochemical characteristics according to the doping amount when Zr, Nb, Ti, B and Nb are doped together in a precursor having a Ni content of 90 mol% or more.

Referring to Table 4, the positive electrode active materials of Examples 1 to 5 in which the NCM precursor was doped with five elements, that is, Zr, Nb, Ti, B, and Nb, it can be confirmed that the discharge capacity, the initial efficiency, room temperature life, high temperature life, room temperature resistance, resistance increase rate, leakage current and DSC peak temperature are effectively improved, compared to the positive electrode active material of Comparative Example 1 in which the NCM precursor was doped with Zr, Nb, Ti, and B

However, in the positive electrode active material of Reference Example 1 doped with 0.005 mol of Nb, the discharge capacity deteriorated and the resistance increase rate significantly increased. In addition, it can be seen that the positive electrode active material of Reference Example 2 doped with 0.01 mol of Nb has significantly deteriorated discharge capacity, initial efficiency, room temperature cycle-life and high temperature cycle-life.

Therefore, in the present exemplary embodiment, it can be confirmed that the doping amount of Nb, as described above, ranges from 0.00025 mol to 0.005 mol, more specifically, from 0.0005 mol to 0.0025 mol, based on 1 mol of metal oxide containing nickel, cobalt, manganese and doping elements, is preferred.

## Experimental Example 2-2. Effects of Zr content

Table 5 shows the electrochemical characteristic evaluation results performed by the method of Experimental Example 2 for the positive electrode active material prepared according to Exemplary Embodiment 6 to 7 and Reference Example 3. For comparison, the result of Example 4 is also displayed.

(Table 5)

| | discharge capacity (mAh/g) | Initial efficiency (%) | room temperature cycle-life (%) | High temperature cycle-life (%) | room temperature initial resistance ($\Omega$) | Resistance increase rate (%) | average leakage current (mA) | DSC peak temperature (°C) |
|---|---|---|---|---|---|---|---|---|
| exemplary embodiment6 | 223.2 | 94.8 | 93.1 | 93.4 | 24.5 | 69.7 | 0.24 | 227 |
| exemplary embodiment4 | 222.4 | 94.6 | 96.1 | 95.0 | 22.5 | 45.5 | 0.21 | 230 |
| exemplary embodiment7 | 220.1 | 93.4 | 96.7 | 96.1 | 27.8 | 43.5 | 0.20 | 230 |
| Reference example 3 | 210.3 | 87.4 | 97.6 | 97.1 | 32.2 | 65.8 | 0.20 | 230 |

In exemplary embodiment 6 to 7 and Reference Example 3, it only changed the doping amount of Zr, when it is fixed at 0.015 mol of Al, 0.0025 mol of Nb, 0.01 mol of B, and 0.0025 mol of Nb.

Referring to Table 5, it can be understood that as the doping amount of Zr increases from 0.002 mol to 0.008 mol, some characteristics are improved and some characteristics are deteriorated.

Specifically, referring to the results of Examples 4, 6, and 7, it can be seen that the higher the doping amount of Zr, the higher the high temperature cycle-life and the room temperature cycle-life. However, as in Reference Example 3, when the Zr doping amount is increased to 0.008 mol, it can be seen that the discharge capacity and initial efficiency are greatly deteriorated.

Therefore, in the present exemplary embodiment, the appropriate doping amount of Zr is in the range of 0.001 mol to 0.007 mol, specifically 0.002 mol to 0.005 mol or 0.0035 mol to 0.005 mol, with respect to 1 mol of nickel, cobalt, manganese and doping elements.

**Experimental Example 2-3. Effect according to Al content**

Table 6 shows the electrochemical characteristic evaluation results performed by the method of Experimental Example 2 for the positive electrode active materials manufactured according to Exemplary Embodiments 8 to 9 and Reference Examples 4 to 5. For comparison, the result of Example 4 is also displayed.

(Table 6)

| | discharge capacity (mAh/g) | Initial efficiency (%) | room temperature cycle-life (%) | High temperature cycle-life (%) | room temperature initial resistance (Ω) | Resistance increase rate (%) | average leakage current (mA) | DSC peak temperature (°C) |
|---|---|---|---|---|---|---|---|---|
| Reference example 4 | 225.1 | 95.0 | 90.5 | **89.7** | 30.5 | **92.4** | 0.56 | 222 |
| exemplary embodiment8 | 224.1 | 94.8 | 93.1 | 92.7 | 24.1 | 61.9 | 0.34 | 228 |
| exemplary embodiment4 | 222.4 | 94.6 | 96.1 | 95.0 | 22.5 | 45.5 | 0.21 | 230 |
| exemplary embodiment9 | 220.1 | 94.0 | 97.1 | 96.4 | 21.3 | 43.2 | 0.20 | 232 |
| Reference example 5 | **212.3** | **86.3** | 97.5 | 97.3 | 20.3 | 40.1 | 0.18 | 235 |

In Exemplary Embodiments 8 to 9 and Reference Examples 4 to 5, only the Al doping amount was changed while the doping amounts were fixed at 0.0035 mol of Zr, 0.0025 mol of Nb, 0.01 mol of B, and 0.001 mol of Ti.

Referring to Table 4, it can be seen that as the amount of Al raw material increases, the room temperature cycle-life and high temperature cycle-life greatly increase, and the room temperature initial resistance, resistance increase rate, and leakage current decrease. Particularly, the DSC peak temperature increased significantly.

However, in the case of Reference Example 4 in which the doping amount of Al to be mixed is 0.005 mol, it can be seen that the high temperature cycle-life significantly decreases and the resistance increase rate also increases. In addition, in the case of Reference Example 5 in which the Al doping amount is 0.025 mol, it can be seen that the discharge capacity is greatly reduced, and thus the initial efficiency is also significantly deteriorated.

Therefore, in the present exemplary embodiment, the doping amount of Al may range from 0.006 mol to 0.029 mol, more specifically, from 0.0085 mol to 0.025 mol, based on 1 mol of nickel, cobalt, manganese and doping raw materials.

**Experimental Example 2-4. Effects of Ti content**

Table 7 shows the electrochemical characteristic evaluation results performed by the method of Experimental Example 2 for the positive electrode active materials prepared according to Exemplary Embodiment 10 to 11 and Reference Examples 6 to 7. For comparison, the result of Example 4 is also displayed.

(Table 7)

| | discharge capacity (mAh/g) | Initial efficiency (%) | room temperature cycle-life (%) | High temperature cycle-life (%) | room temperature initial resistance (Ω) | Resistance increase rate (%) | average leakage current (mA) | DSC peak temperature (°C) |
|---|---|---|---|---|---|---|---|---|
| Reference example 6 | 222.5 | 94.7 | 94.0 | 93.7 | 27.9 | **110.2** | **0.81** | 229 |
| exemplary embodiment10 | 222.5 | 94.5 | 95.0 | 94.3 | 23.7 | 67.7 | 0.43 | 229 |
| exemplary embodiment4 | 222.4 | 94.6 | 96.1 | 95.0 | 22.5 | 45.5 | 0.21 | 230 |
| exemplary embodiment11 | 220.1 | 93.2 | 96.4 | 96.1 | 21.3 | 43.4 | 0.24 | 230 |
| Reference example 7 | **215.1** | **87.1** | 97.1 | 96.4 | 20.1 | 44.2 | 0.27 | 230 |

The doping amount of Exemplary Embodiment 10 to 11 and Reference Examples 6 to 7 was fixed at 0.0035 mol of Zr, 0.015 mol of Al, 0.01 mol of B, and 0.0025 mol of Nb, and only the Ti doping amount was changed.

Referring to Table 7, it can be seen that as the Ti content increases, the room temperature cycle-life, high temperature cycle-life and resistance characteristics increase.

However, in the case of Reference Example 6 doped with 0.0001 mol of Ti, there is a problem that the room temperature resistance is greatly increased and the average leakage current is also increased. In addition, in the case of Reference Example 7 doped with 0.002 mol of Ti, it can be confirmed that the discharge capacity is greatly reduced and the initial efficiency is rapidly deteriorated.

Therefore, in the present exemplary embodiment, an appropriate doping amount of Ti may range from 0.0002 mol to 0.0015 mol, specifically 0.0005 mol to 0.001 mol, based on 1 mol of nickel, cobalt, manganese and doping elements.

**Experimental Example 2-5. Effect according to B content**

Table 8 shows the electrochemical characteristic evaluation results performed by the method of Experimental Example 2 for the positive electrode active materials manufactured according to Exemplary Embodiment 12 and Reference Examples 8 to 9. For comparison, the result of Example 4 is also displayed.

(Table 8)

| | discharge capacity (mAh/g) | Initial efficiency (%) | room temperature cycle-life (%) | High temperature cycle-life (%) | room temperature initial resistance (Ω) | Resistance increase rate (%) | average leakage current (mA) | DSC peak temperature (°C) |
|---|---|---|---|---|---|---|---|---|
| Reference example 8 | 224.1 | 94.9 | 92.1 | 92.4 | 22.0 | 110.2 | 0.78 | 221 |
| exemplary embodiment 12 | 223.7 | 94.7 | 94.2 | 94.3 | 22.1 | 68.8 | 0.24 | 228 |
| exemplary embodiment 4 | 222.4 | 94.6 | 96.1 | 95.0 | 22.5 | 45.5 | 0.21 | 230 |
| Reference example 9 | 217.1 | 88.4 | 96.5 | 96.1 | 28.1 | 41.0 | 0.20 | 230 |

The doping amount of Example Embodiment 12 and Reference Examples 8 to 9 is Zr 0.0035 mol, Al 0.015 mol, Ti 0.001 mol, Nb 0.0025 mol in a state where only the B doping amount is changed.

Referring to Table 8, it can be seen that the general cycle-life and resistance increase rate are improved as the content of B increases.

However, in the case of Reference Example 8 in which the doping amount of B is 0.001 mol, the room temperature resistance increases rapidly, and in the case of Reference Example 9 in which the doping amount of B is 0.015 mol, there is a problem in that the discharge capacity is significantly reduced.

Therefore, in the present exemplary embodiment, it can be confirmed that the doping amount of B may range from 0.001 mol to 0.015 mol, preferably from 0.005 mol to 0.01 mol, based on 1 mol of the total of nickel, cobalt, manganese and doping elements.

**Experimental Example 2-6. Effects of Ni content**

Table 9 shows the electrochemical characteristic evaluation results performed by the method of Experimental Example 2 for the positive electrode active material manufactured according to Comparative Example 2 to 6, Reference Examples 10 to 11 and Exemplary Embodiments 13 to 15. For comparison, the results of Comparative Example 1 and Example Embodiment 5 are also displayed.

(Table 9)

| | discharge capacity (mAh/g) | Initial efficiency (%) | room temperaturecy cle-life (%) | High temperature cycle-life (%) | room temperature initial resistance ($\Omega$) | Resistance increase rate (%) | average leakage current (mA) |
|---|---|---|---|---|---|---|---|
| Comparative Example2 (Ni80%) | 201.7 | 88.7 | 96.1 | 96.2 | 14.3 | 44.1 | 0.20 |
| Reference example 10 | 199.5 | 87.6 | 97.7 | 96.1 | 16.2 | 43.2 | 0.21 |
| Comparative Examples (Ni83%) | 205.8 | 88.9 | 95.1 | 94.7 | 16.2 | 48.3 | 0.20 |
| Reference example 11 | 204.9 | 88.4 | 95.3 | 95.1 | 20.1 | 49.2 | 0.24 |
| Comparative Example4 (Ni85%) | 209.1 | 88.5 | 95.2 | 95.1 | 24.3 | 61.7 | 0.23 |
| exemplary embodiment1 3 | 212.3 | 90.3 | 96.3 | 96.2 | 22.1 | 45.3 | 0.21 |
| Comparative Examples (Ni86%) | 210.2 | 90.4 | 93.7 | 93.2 | 26.3 | 78.1 | 0.28 |
| exemplary embodiment1 4 | 213.5 | 92.6 | 96.1 | 95.9 | 22.4 | 48.3 | 0.23 |
| Comparative Examples (Ni88%) | 215.3 | 91.2 | 94.7 | 94.1 | 30.0 | 97.3 | 0.31 |
| exemplary embodiment1 5 | 220.7 | 93.4 | 96.3 | 96.1 | 24.2 | 45.7 | 0.21 |
| Comparative Example1 (Ni92%) | 215.5 | 90.1 | 88.7 | 85.7 | 26.5 | 91.2 | 0.34 |
| exemplary embodiment5 | 226.8 | 94.9 | 94.8 | 94.5 | 22.4 | 69.8 | 0.20 |

Comparative Examples 1 to 6 are cases in which quaternary doping is performed on NCM precursors, and Reference Examples 10 to 11 and Examples 13 to 15 are positive electrode active materials in which 5-element doping is performed on NCM precursors.

Referring to Table 9, in the case of Reference Examples 10 and 11, when the Ni content is less than 85%, even if the 5-element doping is performed, the discharge capacity and initial efficiency are reduced when Nb is added. It appears that Nb operated as some resistance. However, referring to Example Embodiments 13 to 15, it can be seen that when the Ni content is 85% or more, the discharge capacity and the initial efficiency greatly increase in the case of 5-element doping including Nb.

This is because although the resistance characteristic of Nb itself is higher than the resistance that occurs when a small amount of Ni is included, it is lower than the resistance characteristic that appears as Ni increases. That is, in the case of the high-nickel NCM positive electrode material, it is thought that the rapid increase in resistance caused by the increase in Ni can be suppressed to some extent by being doped with Nb. Due to this, the high temperature cycle-life and room temperature cycle-life are generally increased and the resistance increase rate characteristic is also improved. In conclusion, it can be understood that when a product with a Ni content of 85% or more is doped with a 5-element material (Zr, Al, Ti, B, Nb), the effect of increasing discharge capacity and initial efficiency is very excellent, and other properties are improved as a whole. Therefore, it can be confirmed that the effect of the 5-component doping material of the present embodiment is maximized in an area of 85% or more Ni.

**Experimental Example 3 - Diffusion coefficient and impedance analysis**

Diffusion coefficient and impedance analysis was performed on the positive electrode active material prepared according to Exemplary Embodiment 1 to 5, Reference Example 1 to 2 and Comparative Example 1, and the results are shown in Table 8 below.

The diffusion coefficient was measured by the GITT method, and after 30 minutes of charging, 50 minutes of maintenance was performed, and the data obtained at this time were analyzed using Equation 3 below.

[Equation 3]

$$D = \frac{4}{\pi}\left(\frac{V_M I_0}{AFZ_{Li}}\right)^2 \left[\left(\frac{dE_s}{dx}\right)/\left(\frac{dE_t}{d\sqrt{t}}\right)\right]^2$$

In Equation 3,

$V_M$: molar volume of positive electrode active material
A: electrode area when measuring diffusion coefficient
F: Faraday constant
$Z_{Li}$: +1
$I_0$: 0.1C
x: fraction in which lithium is present in the electrode
$dE_s$: voltage change obtained in the maintaining section,
dEt: Voltage change obtained in the charging section
t: time (sec)

Specifically, the molar volume of the positive electrode active material was calculated using the unit volume analyzed through XRD measurement results. A is the electrode area when measuring the diffusion coefficient. In the case of the coin cell used in this diffusion coefficient measurement, the area has a size of 1.538 cm$^2$. $I_0$ means 0.1C current value. X can be calculated assuming that the entire charge and discharge section is 100%. For example, x corresponding to the initial 30-minute charging section can be expressed as 0.05, x corresponding to the second 30-minute charging section can be expressed as 0.1, and x corresponding to the middle section can be expressed as 0.5.

Impedance analysis was analyzed using the impedance graph obtained at 3.7V, and is shown in Table 10 like the diffusion coefficient. When Nyquist plot was performed by separating the obtained impedance value into the real axis and the imaginary axis, the figure obtained was divided into two semicircles and fitted to obtain $R_{sei}$ and $R_{ct}$. At this time, the resistance value obtained by the semicircle generated in the high frequency region was named $R_{sei}$, and the resistance value obtained by the semicircle generated in the low frequency region was named $R_{ct}$ to obtain the resistance value.

(Table 10)

|  | initial diffusion coefficient (*10$^{-9}$m$^2$/sec) | initial Rsei (Ω) | initial Ret (Ω) | diffusion coefficient after cycle (*10$^9$m$^2$/sec ) | Rsei after cycle (Ω) | Ret after cycle (Ω) | diffusion coefficient increase rate (%) | Rsei increase rate (%) | Rct increase rate (%) |
|---|---|---|---|---|---|---|---|---|---|
| Comparative Example1 | 6.56 | 0.9 | 4.5 | 4.61 | 11.1 | 6.7 | 29.8 | 644 | 562 |
| exemplary embodiment 1 | 6.91 | 1.1 | 4.3 | 5.36 | 10.9 | 5.5 | 22.5 | 400 | 423 |
| exemplary embodiment 2 | 703 | 1.2 | 4.6 | 5.93 | 11.0 | 3.7 | 15.6 | 208 | 239 |
| exemplary embodiment 3 | 7.33 | 1.5 | 4.7 | 6.53 | 9.7 | 3.0 | 10.9 | 100 | 131 |
| exemplary embodiment 4 | 7.42 | 1.6 | 4.3 | 6.61 | 9.8 | 3.1 | 10.9 | 93.7 | 153 |
| exemplary embodiment 5 | 7.58 | 1.8 | 4.6 | 6.75 | 9.5 | 2.9 | 11.0 | 61.1 | 139 |
| Reference example 1 | 7.26 | 2.3 | 4.7 | 6.50 | 9.8 | 3.3 | 10.4 | 43.5 | 121 |
| Reference example 2 | 6.16 | 3.4 | 4.8 | 5.70 | 11.6 | 4.0 | 7.5 | 17.6 | 118 |

Referring to Table 10, in an exemplary embodiment using Zr, Nb, B, Al, and Ti as doping elements, it can be confirmed that the resistance increase rate of $R_{sei}$ and $R_{ct}$ is significantly lowered after cycling. That is, it can be confirmed that the rate of increase in $R_{sei}$ and $R_{ct}$ resistances is effectively suppressed by simultaneous doping of these elements.

The present invention is not limited to the exemplary embodiment, but can be manufactured in a variety of different forms, and a person of an ordinary skill in the technical field to which the present invention belongs does not change the technical idea or essential characteristics of the present invention. It will be appreciated that it may be embodied in other specific forms. Therefore, the exemplary embodiment described above should be understood as illustrative in all respects and not limiting.

**Claims**

1. A positive electrode active material for lithium secondary battery, comprising:

   a metal oxide particle including nickel, cobalt and manganese; and
   fiver doping elements doped into the metal oxide particle.

2. The positive electrode active material of claim 1, wherein:
   the five doping elements are Al, Nb, B, Zr and Ti.

3. The positive electrode active material of claim 2, wherein:
   the doping amount of the Al is 0.006 mol to 0.029 mol, based on 1 mol of the total of nickel, cobalt, manganese and doping elements.

4. The positive electrode active material of claim 2, wherein:
   the doping amount of the Nb is 0.00025 mol to 0.005 mol, based on 1 mol of the total of nickel, cobalt, manganese and doping elements.

5. The positive electrode active material of claim 2, wherein:
   the doping amount of the B is 0.001 mol to 0.015 mol, based on 1 mol of the total of nickel, cobalt, manganese and doping elements.

6. The positive electrode active material of claim 2, wherein:
   the doping amount of the Zr is 0.001 mol to 0.007 mol, based on 1 mol of the total of nickel, cobalt, manganese and doping elements.

7. The positive electrode active material of claim 2, wherein:
   the doping amount of the Ti ranges from 0.0002 mol to 0.0015 mol, based on 1 mol of the total of nickel, cobalt, manganese and doping elements.

8. The positive electrode active material of claim 2, wherein:
   the doping amount of the Nb, Al and Zr satisfies the relationship of Equation 1 below.

[Equation 1]

$$4 < ([Zr]+[Al])/[Nb] < 210$$

(In Equation 1, [Nb], [Al] and [Zr] mean the doping amount of each element based on 1 mole of the total sum of nickel, cobalt, manganese and doping elements)

9. The positive electrode active material of claim 2, wherein:

   the doping amount of the Nb, Ti and B satisfies the relationship of Equation 2 below.

## [Equation 2]

$$3 < ([B]+[Ti])/[Nb] < 120$$

(In Equation 2, [Nb], [Ti] and [B] mean the doping amount of each element based on 1 mole of the total sum of nickel, cobalt, manganese and doping elements)

10. The positive electrode active material of claim 1, wherein:

the positive electrode active material is represented by Chemical Formula 1 below.

[Chemical Formula 1] $\quad Li_a[Ni_xCo_yMn_z]_{1-t}(Al_hNb_iZr_jB_kTi_m)_tO_{2-p}X2_p$

(in the Chemical Formula 1,

X is one or more elements selected from the group containing F, N, and P,
a is $0.8 \leq a \leq 1.3$,
t is $0.008 \leq t \leq 0.05$,

$0.6 \leq x \leq 0.95$, $0 < y \leq 0.2$, $0 < z \leq 0.2$, $0.006 \leq h \leq 0.025$, $0.00025 \leq i \leq 0.005$, $0.001 \leq j \leq 0.007$, $0.006 \leq k \leq 0.029$, $0.0002 \leq m \leq 0.015$, and $0 \leq p \leq 0.02$.)

11. The positive electrode active material of claim 1, wherein:
an initial diffusion coefficient of the positive electrode active material ranged from $6.91*10^{-9}m^2/sec$ to $7.58*10^{-9}m^2/sec$.

12. The positive electrode active material of claim 1, wherein:
a grain size of the metal oxide particle ranges from 1,036 Å to 1,440 Å.

13. The positive electrode active material of claim 1, wherein:
a full width at half maximum (FWHM) values for the (110) planes of the metal oxide particle ranged from 0.126 to 0.204.

14. The positive electrode active material of claim 1, wherein:
when measuring the X-ray diffraction pattern of the positive electrode active material for the lithium secondary battery, the ratio of the peak intensity of the (003) plane to the peak intensity of the (104) plane, I(003)/I(104), ranges from 1.186 to 1.204.

15. The positive electrode active material of claim 1, wherein:
a content of nickel in the metal oxide particle is 0.8 mol or more, based on 1 mol of the total of the nickel, cobalt and manganese.

16. A lithium secondary battery, comprising:

a positive electrode comprising the positive electrode active material of any one of claims 1 to 15;
a negative electrode; and
a non-aqueous electrolyte.

## INTERNATIONAL SEARCH REPORT

| International application No. |
|---|
| **PCT/KR2021/019440** |

### A. CLASSIFICATION OF SUBJECT MATTER

**H01M 4/525**(2010.01)i; **H01M 4/505**(2010.01)i; **H01M 10/052**(2010.01)i

According to International Patent Classification (IPC) or to both national classification and IPC

### B. FIELDS SEARCHED

Minimum documentation searched (classification system followed by classification symbols)

H01M 4/525(2010.01); H01M 10/052(2010.01); H01M 10/0525(2010.01); H01M 4/48(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 니켈(nickel), 코발트(cobalt), 망간(manganese), 도핑(doping), 알루미늄 (aluminum), 니오븀(niobium), 지르코늄(zirconium), 붕소(boron), 티타늄(titanium), 리튬 이차전지(lithium secondary battery), 양극 활물질(positive electrode material)

### C. DOCUMENTS CONSIDERED TO BE RELEVANT

| Category* | Citation of document, with indication, where appropriate, of the relevant passages | Relevant to claim No. |
|---|---|---|
| X | KR 10-2019-0081610 A (L & F CO., LTD.) 09 July 2019 (2019-07-09) See paragraphs [0030], [0034]-[0036] and [0061]-[0072]; example 4; and table 1. | 1,15,16 |
| Y | | 2-14 |
| Y | KR 10-2018-0071714 A (POSCO et al.) 28 June 2018 (2018-06-28) See paragraphs [0032] and [0035]. | 2-14 |
| A | KR 10-2020-0036424 A (POSCO et al.) 07 April 2020 (2020-04-07) See entire document. | 1-16 |
| A | KR 10-2020-0047116 A (LG CHEM, LTD.) 07 May 2020 (2020-05-07) See entire document. | 1-16 |

✓ Further documents are listed in the continuation of Box C.    ✓ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 March 2022** | **28 March 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2021/019440** |

**C.** DOCUMENTS CONSIDERED TO BE RELEVANT

| Category* | Citation of document, with indication, where appropriate, of the relevant passages | Relevant to claim No. |
| --- | --- | --- |
| A | KR 10-2010-0042145 A (IUCF-HYU (INDUSTRY-UNIVERSITY COOPERATION FOUNDATION HANYANG UNIVERSITY)) 23 April 2010 (2010-04-23) <br> See entire document. | 1-16 |

Form PCT/ISA/210 (second sheet) (July 2019)

**INTERNATIONAL SEARCH REPORT**
Information on patent family members

International application No.

**PCT/KR2021/019440**

| Patent document cited in search report | | | Publication date (day/month/year) | Patent family member(s) | | | Publication date (day/month/year) |
|---|---|---|---|---|---|---|---|
| KR | 10-2019-0081610 | A | 09 July 2019 | None | | | |
| KR | 10-2018-0071714 | A | 28 June 2018 | None | | | |
| KR | 10-2020-0036424 | A | 07 April 2020 | KR | 10-2220490 | B1 | 24 February 2021 |
| KR | 10-2020-0047116 | A | 07 May 2020 | CN | 112840486 | A | 25 May 2021 |
| | | | | EP | 3843181 | A1 | 30 June 2021 |
| | | | | JP | 2022-501789 | A | 06 January 2022 |
| | | | | WO | 2020-085731 | A1 | 30 April 2020 |
| KR | 10-2010-0042145 | A | 23 April 2010 | KR | 10-1049543 | B1 | 14 July 2011 |

Form PCT/ISA/210 (patent family annex) (July 2019)